# EUROPÄISCHE PATENTSCHRIFT

(11) **EP 1 133 348 B1**
(45) Veröffentlichungstag und Bekanntmachung des Hinweises auf die Patenterteilung: **12.10.2005**
(21) Anmeldenummer: 99957962.6
(22) Anmeldetag: 08.11.1999
(51) Int. Cl.: B01F 5/06, C02F 9/00

(54) **VERFAHREN UND ANORDNUNG ZUM EINBRINGEN VON GAS IN FLÜSSIGKEITEN ÜBER EINEN NEUARTIGEN MISCHER**
METHOD AND DEVICE FOR INTRODUCING GAS INTO LIQUIDS BY MEANS OF A NOVEL MIXER
PROCEDE ET DISPOSITIF POUR L'INTRODUCTION DE GAZ DANS DES LIQUIDES AU MOYEN D'UN MELANGEUR DE TYPE NOUVEAU

(30) Priorität: 08.11.1998 DE 19851360
(43) Veröffentlichungstag der Anmeldung: 19.09.2001
(60) Teilanmeldung: 04022984.1
(73) Patentinhaber: Spiegel, Pasquale, 21509 Glinde (DE)
(72) Erfinder: Spiegel, Margret, 21509 Glinde (DE); Spiegel, Pasquale, 21509 Glinde (DE)
(74) Vertreter: Heldt, Gert
(86) Internationale Anmeldenummer: PCT/DE1999/003559
(87) Internationale Veröffentlichungsnummer: WO 2000/027515

(56) Entgegenhaltungen:
- EP-A- 0 285 725
- WO-A-96/17529
- DE-A- 2 702 566
- DE-A- 3 534 113
- DE-U- 29 707 300
- GB-A- 340 503
- US-A- 1 737 336
- US-A- 2 229 441
- US-A- 2 950 062
- US-A- 4 136 976
- US-A- 4 752 383
- US-A- 5 021 250
- US-A- 5 417 348

## Beschreibung

Die Erfindung betrifft eine Anordnung von Mischen von Flüssigkeit mit einem Gas in einem Mischer, der in einem Rohr angeordnet ist, das jeweils einen Anschluß für eine Gaseinspeisung und eine Flüssigkeitseinspeisung sowie eine Entnahme für die mit Gas gemischte Flüssigkeit aufweist, und bei der zwischen den Anschlüssen für die Gaseinspeisung und für die Flüssigkeitseinspeisung einerseits und der Entnahme für die mit Gas gemischte Flüssigkeit andererseits von der Flüssigkeit und dem Gas durchströmbare Böden vorgesehen sind.

Darüber hinaus betrifft die Erfindung die Verwendung dieser Anordnung zum Mischen.

Bekanntlich ist CO² als Zusatz zu einer Flüssigkeit, insbesondere zu Wasser, in der Lage, den gegenwärtig so beliebten Eindruck der Frische eines Getränks hervorzurufen. Ein CO²-Zusatz kann außerdem schales oder abgestandenes oder mit Desinfektionsmitteln versetztes Wasser geschmacklich verbessern. Daher wird Wasser (mit oder ohne Mineralstoffen) in Flaschen oder sonstigen Behältern mit CO² versetzt, das unter Druck in die Flüssigkeit eingebracht und z. B. von sogenannten CO²-Patronen abgegeben wird. Der Kauf von mit CO² versetztem Wasser in Flaschen ist wegen der damit verbundenen Transporte umständlich und teuer. Die bisher benutzte Selbstherstellung von mit CO² versetzten Getränken ist ebenfalls umständlich, weil das CO²-Gas im Innenraum von Druckbehältern in das Wasser eingebracht werden muß und innerhalb der Druckbehälter unter Druck verbleibt.

Die der Erfindung zugrundeliegende Aufgabe besteht daher darin, mit CO² versetzte Flüssigkeiten, insbesondere Wasser, leicht und kontinuierlich herstellen zu können, wobei der CO²-Verbrauch sich nach der Menge des zugeführten und abgezapften Wassers richtet.

Die Lösung gemäß der Erfindung besteht darin, dass die Böden als Mischsiebe ausgebildet sind, die aneinander anliegen.

Mit einem derartigen Mischer können Getränke, insbesondere Wasser und Mineralwasser, aber auch Erfrischungsgetränke wie Limonade, Obstsäfte und mit anderen Geschmacksstoffen versetzte Flüssigkeiten carbonisiert, das heißt, mit CO² (Kohlendioxid) versetzt werden, so dass sie in der Lage sind, den gegenwärtig so beliebten Eindruck der Frische hervorzurufen.

Eine bevorzugte Ausführungsform der Erfindung besteht darin, dass der Mischer eine Einstellmöglichkeit für unterschiedliche Mischungsverhältnisse beim Mischen von Gas mit Flüssigkeiten aufweist. Dadurch wird die Aufnahme von CO² und anderen Gasen verbessert. Mit geringem Druck von Flüssigkeiten und Gasen wird eine sehr hohe Mischqualität (Carbonisierung) erreicht.

Gemäß einer weiteren bevorzugten Ausführungsform der Erfindung weist der Mischer für die Versorgung mit Flüssigkeit und Gas Druckminderer für die Flüssigkeit und das Gas auf, die mit einer Festeinstellung im Verhältnis des Gases zur Flüssigkeit versehen ist. Dadurch wird der Mischer in die Lage versetzt, z. B. Soda-Wasser in gleichbleibender Qualität zu liefern, vorausgesetzt, dass weder der Wasserstrom noch die Gaszufuhr zum Mischer unterbrochen wird. Im Vergleich zu herkömmlichen Systemen, die einen sehr hohen Druck für die Herstellung von CO²-Wasser benötigen, kommt der Mischer mit einem relativ geringen Flüssigkeits- und Gasdruck aus. Das von ihm hergestellte Soda-Wasser entspricht einer sogenannten Flaschenqualität, unter der die übliche Qualität von Soda-Wasser verstanden wird, das handelsüblich in Flaschen abgefüllt ist.

Gemäß einer weiteren bevorzugten Ausführungsform der Erfindung ist der Mischer mit einem Zapfventil oder einer Mischbatterie für die Entnahme von Soda-Wasser verbunden. Als Mischbatterien kommen Einhand- oder Zweihandmischbatterien mit mindesten einem Kaltwasserzulauf in Betracht. Dabei sind die jeweiligen Armaturen, aus denen Soda-Wasser gezapft werden kann, so konstruiert, dass es möglich ist, normales Kalt- oder Warmwasser, Mischwasser und über ein gesondertes Absperrventil Soda-Wasser in einer sehr guten Qualität zu zapfen.

Gemäß einer weiteren bevorzugten Ausführungsform der Erfindung weist ein Rohr, in dem der Mischer eingebaut ist, eine Anschlußmöglichkeit für Geschmacksstoffe (alkoholfrei oder alkoholisch) auf. Auf diese Weise kann der Mischer dafür genutzt werden, um auch Erfrischungsgetränke herzustellen.

Gemäß einer weiteren bevorzugten Ausführungsform der Erfindung ist der Mischer in einen zur Herstellung von Erfrischungsgetränken geeignete Getränkeautomaten eingebaut. In diesem Fall wird der Mischer von Wasser und CO² durchströmt, so dass das Wasser nach dem Durchströmen des Mischers eine hohe Carbonisierung aufweist. Nach diesem Mischvorgang werden Geschmacksstoffe zugeführt. Diese Zuführung kann portionsweise oder kontinuierlich geschehen. Auf diese Weise kann der Mischer auch zur Herstellung alkoholischer Getränken genutzt werden. Dabei kommt eine Nutzung in privaten Haushalten oder für industrielle Zwecke in Betracht.

Gemäß einer weiteren bevorzugten Ausführungsform der Erfindung ist der Mischer in eine Reinigungsmaschine integriert. Dabei ist an Teppichreinigungsmaschinen zu denken. Dabei wird der Mischer hinter einer Pumpe eingebaut, die mit einem Vorratsbehälter verbunden ist. Auf diese Weise kann cabonisiertes Wasser für die Teppichreinigung hergestellt werden.

Gemäß einer weiteren bevorzugten Ausführungsform der Erfindung ist der Mischer in eine Waschmaschine integriert. Dabei kommen Waschmaschinen für die Industrie oder für Haushaltszwecke in Betracht. Das für den Waschvorgang benötigte Wasser wird zusammen mit CO² durch den Mischer in die Waschmaschine geleitet.

Gemäß einer weiteren bevorzugten Ausführungsform der Erfindung hängt die Anzahl der aneinander anliegenden Mischsiebe von dem jeweiligen Aufgabengebiet der aufzumischenden Flüssigkeit ab. Damit wird auch der Mischer entsprechend dem Aufgabengebiet konstruiert, in dem er verwendet werden soll. Auch die Auswahl des Durchmessers für den Mischer und damit der Mischsiebe hängt vom Aufgabengebiet ab, in dem das aufzumischende Wasser Verwendung finden soll. Schließlich hängt von dem jeweils zu bedienenden Aufgabengebiet auch die auszuwählende Stärke und die Maschengröße (Durchlaßgröße) der Mischsiebe ab.

Gemäß einer weiteren bevorzugten Ausführungsform der Erfindung besteht das zur Aufnahme der Mischsiebe vorgesehene Rohr aus VA-Stahl. Darüber hinaus kann es auch aus einem Kunststoff bestehen. Ein gleich guter Mischungseffekt wird auch mit Metall- oder Kunststoffscheiben erzielt, die mit den Maschen entsprechenden Bohrungen versehen sind und innerhalb des Rohres eine gleiche Anordnung wie die Mischsiebe besitzen.

Gemäß einer weiteren bevorzugten Ausführungsform der Erfindung besteht der Mischer aus mindestens zwei hintereinander geschalteten Teilmischern. Mit diesen wird ein gleich guter Mischungseffekt wie mit einem Mischer erzielt. Die Teilmischer können ähnlich aufgebaut sein wie die Mischer.

Gemäß einer weiteren bevorzugten Ausführungsform der Erfindung ist der Mischer mit einer Zuleitung für gekühlte Flüssigkeit versehen. Bei der Verwendung von gekühlter Flüssigkeit erzielt der Mischer gute Mischungsverhältnisse. Darüber hinaus liefert der Mischer allerdings in einem weiten Temperaturschwankungsbereich des mit CO² zu vermischenden Wassers immer eine gleichbleibende Qualität von Soda-Wasser oder anderen Getränken.

Gemäß einer weiteren bevorzugten Ausführungsform der Erfindung befindet sich der Mischer in einem Rohr. Dieses besitzt jeweils einen Anschluß für die Flüssigkeits- und die Gaseinspeisung. Darüber hinaus kann es auch eine Anschlußmöglichkeit für eine Dosierstation besitzen, die nach Durchführung der Mischung von Gas und Flüssigkeit vorgesehen ist. Jedoch kann diese Dosierstation auch vor Durchführung des Mischvorganges mit dem Mischer verbunden sein.

Gemäß einer weiteren bevorzugten Ausführungsform der Erfindung befinden sich in dem Rohr integrierte Befestigungsmöglichkeiten für den Mischer. Dadurch wird der Mischer fest mit dem Rohr verbunden, so dass eine gut zu installierende Baueinheit entsteht.

Gemäß einer weiteren bevorzugten Ausführungsform der Erfindung weist das Rohr bei einer vorgegebenen Durchströmgeschwindigkeit des Gas-Flüssigkeitsgemisches eine für eine notwendige Reaktionszeit geeignete Länge auf. Auf diese Weise wird das Rohr so ausgelegt, dass das Flüssigkeits-Gasgemisch für eine notwendige Reaktionszeit in ihm verweilt. Dabei können die Anschlüsse für die Flüssigkeits- und Gaszufuhr als lösbare Verbindungen ausgebildet sein.

Gemäß einer weiteren bevorzugten Ausführungsform der Erfindung weist das Rohr eine Anschlußmöglichkeit für ein Gasbehältnis auf. Zu diesem Zwecke besitzt eine mit dem Rohr verbundene Leitung eine Anschlußmöglichkeit für den Anbau des Gasbehältnisses. Diese Leitung kann flexibel sein. Darüber hinaus kann der Anschluß für das Gasbehältnis so ausgebildet sein, dass mit der Leitung nur solche Gasbehältnisse verbunden werden können, die eine spezielle Anschlußmöglichkeit aufweisen. Auf diese Weise kann das Anschließen anderer Gasbehältnisse, die für die Versorgung des Mischers nicht lizenziert sind, ausgeschlossen werden.

Gemäß einer weiteren bevorzugten Ausführungsform der Erfindung wird zur Festeinstellung des Gasvolumenstroms und des Gasdrukkes in Bezug auf die Durchflußmenge und den Druck der Flüssigkeit ein Volumenstromventil verwendet. Durch die Festeinstellung des Gasdruckes sowie des Gasvolumenstroms im Verhältnis zur Durchflußmenge und dem Druck der Flüssigkeit wird eine optimale Qualität der Gas-Flüssigkeitsmischung, beispielsweise des Soda-Wassers erreicht. In Einsatzbereichen, in denen eine Festeinstellung nicht erforderlich ist, kann der Mischer problemlos auch ohne eine Festeinstellung eingesetzt werden. Dabei ist der Mischer nicht nur für das Cabonisieren von Wasser ausgelegt, sondern kann zur Herstellung von Flüssigkeits-Gasgemischen bei allen erdenklichen Flüssigkeiten und Gasarten eingesetzt werden.

Weitere Einzelheiten der Erfindung ergeben sich aus der nachfolgenden ausführlichen Beschreibung von Ausführungsbeispielen. In den Zeichnungen zeigen:

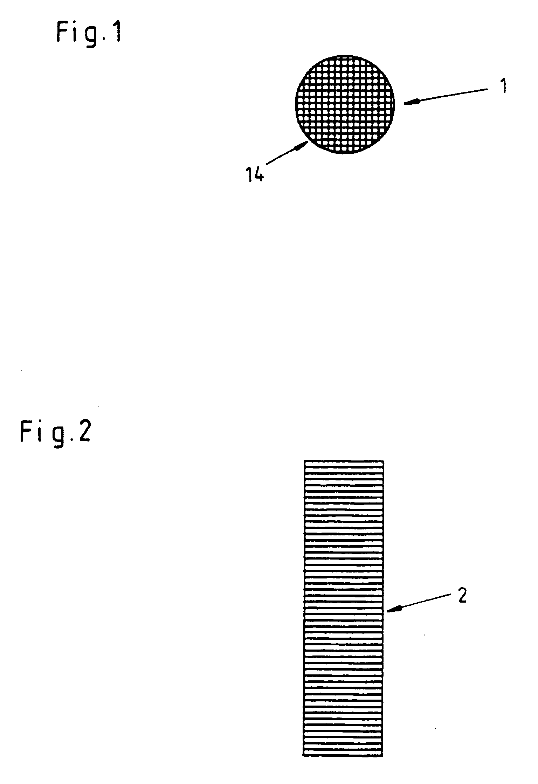

- Fig. 1:: Eine Draufsicht auf ein einzelnes Mischsieb,
- Fig. 2:: einen Längsschnitt durch einen kompletten Mischer, der aus einzelnen Sieben besteht,

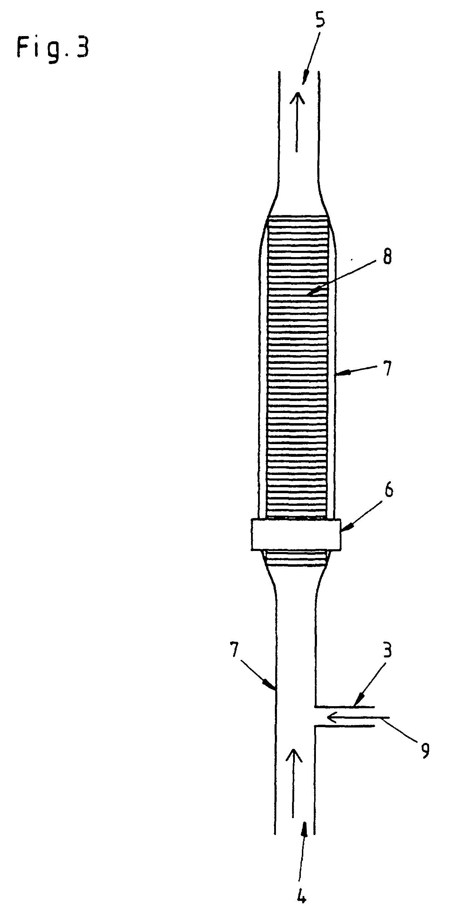

- Fig. 3:: einen Längsschnitt durch einen in ein Rohr eingebauten Mischer mit Anschlußmöglichkeiten,

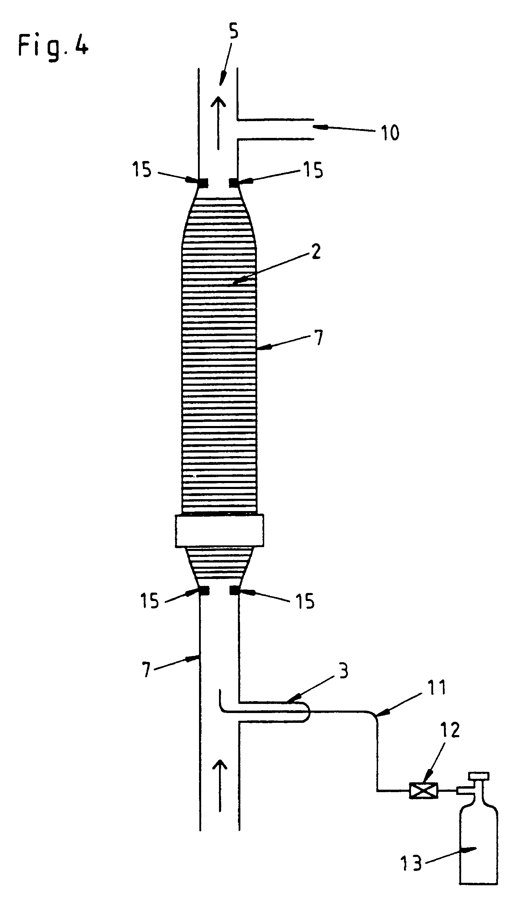

- Fig. 4:: einen weiteren Längsschnitt durch einen in ein Rohr eingebauten Mischer mit Zuleitungen für Flüssigkeit, Gas und Geschmacksstoffe.

Ein Mischer besteht aus mehreren Mischsieben 1, die aneinander anliegen. Der Mischer 2 ist in ein Rohr 7 eingesetzt, das über eine Anschlußmöglichkeit 3 für eine Gasversorgung und eine Flüssigkeitseinspeisung 4 verfügt. Die Anschlußmöglichkeit 3 für die Gasversorgung ist über eine Gasleitung 11 mit einem Gasbehältnis 13 verbunden. In der Gasleitung 11 ist eine Gasbehältnisanschlußmöglichkeit 12 eingebaut, die eine Möglichkeit vorsieht, lizenzierte Gasbehältnisse 13 mit der Gasleitung 11 zu verbinden.

Das Mischsieb 1 eines Mischers 2 besitzt Maschen 14. Die Beschaffenheit dieser Maschen 14, beispielsweise die Größe und die Anzahl der Maschen 14 wird je nach dem Aufgabengebiet ausgewählt, in dem die mit Gas aufzumischende Flüssigkeit verwendet werden soll. Ebenso richtet sich die Anzahl der einen Mischer 2 ausbildenden Mischsiebe 1 nach dem Aufgabengebiet, in dem die mit Gas aufzumischende Flüssigkeit eingesetzt wird. Dabei sind Einsatzmöglichkeiten des mit Gas aufgemischten Wassers im Gartenbau, in der Landwirtschaft, in Reinigungsmaschinen und zur Herstellung von Soda-Wasser möglich.

Der aus den einzelnen Mischsieben 1 bestehende Mischer 2 ist über Festsetzungspunkte 15 in dem Rohr 7 befestigt. Nachdem das Flüssigkeits-Gasgemisch den Mischer 2 verlassen hat, tritt es aus einem Austritt 5 aus dem Rohr 7 aus. Dabei ist die Länge des Rohres 7 so bemessen, dass das Gas-Flüssigkeitsgemisch innerhalb des Rohres 7 ausreichend Zeit für eine Reaktion besitzt. Im Bereich des Austritts 5 wird das Rohr 7 mit dem gewünschten Einsetzungsbereich des Mischers 2 verbunden, beispielsweise mit einem Zapfventil oder einer Mischbatterie zum Zapfen von Soda-Wasser, oder einem Getränkeautomaten oder einer Reinigungsmaschine oder einer in der Landwirtschaft oder im Gartenbau eingesetzten Bewässerungsanlage oder in einer Waschmaschine.

Zur Herstellung von Erfrischungsgetränken kann das Flüssigkeits-Gasgemisch mit Geschmacksstoffen angereichert werden. Diese werden über eine Einspeisungsmöglichkeit 10 beispielsweise in das aus dem Mischer 2 austretende Flüssigkeits-Gasgemisch eingeleitet. Es ist jedoch auch möglich, die Einspeisungsmöglichkeit 10 vor Eintritt des Flüssigkeit-Gasgemisches in den Mischer 2 im Rohr 7 vorzusehen. In diesem Falle werden die Geschmacksstoffe gemeinsam mit dem Flüssigkeits-Gasgemisch durch den Mischer 2 in Richtung auf den Auslaß 5 durchgeleitet.

Damit läuft der Mischvorgang zum Mischen von Flüssigkeiten mit Gasen wie folgt ab. Vor Eintritt in den Mischer 2 wird eine Flüssigkeitseinspeisung 4 an einer Gaseinspeisung 9 mit Gas angereichert, das aus einem Gasbehältnis 13 über eine Gasleitung 11 in die Anschlußmöglichkeit 3 eingeleitet wird. Aus dem Gas und der Flüssigkeit bildet sich ein Gemisch, das in den Mischer 2 eingeleitet und dort kräftig vermischt wird. Das im Mischer 2 intensiv durchmischte Flüssigkeits-Gasgemisch wird ggf. an der Einspeisung 10 für Geschmacksstoffe vorbei geleitet und dort mit Geschmacksstoffen angereichert. Sodann tritt das hergestellte Gemisch aus dem Austritt 5 aus, der zu diesem Zwecke mit dem gewünschten Einsetzungsbereich verbunden ist, in dem das Flüssigkeits-Gasgemisch eingesetzt werden soll.

## Patentansprüche

1. Anordnung zum Mischen von Flüssigkeiten mit Gas in einem Mischer (2), der in einem Rohr (7) angeordnet ist, das jeweils einen Anschluß für eine Gaseinspeisung (9) und eine Flüssigkeitseinspeisung (4) sowie eine Entnahme (5) für die mit Gas gemischte Flüssigkeit aufweist, und bei der zwischen den Anschlüssen (9,4) für die Gaseinspeisung und für die Flüssigkeitseinspeisung einerseits und der Entnahme (5) für die mit Gas gemischte Flüssigkeit andererseits von der Flüssigkeit und dem Gas durchströmbare Böden vorgesehen sind, **dadurch gekennzeichnet, dass** die Böden als Mischsiebe (1) ausgebildet sind, die aneinander anliegen.

2. Anordnung nach einem oder mehreren der vorhergehenden Ansprüche, **dadurch gekennzeichnet, dass** der Mischer (2), der aus einzelnen Mischsieben (1) besteht, sich in einem Rohr (7) befindet.

3. Anordnung nach einem oder mehreren der vorhergehenden Ansprüche, **dadurch gekennzeichnet, dass** der Mischer (2) sich in einem Rohr (7) befindet und integrierte Befestigungsmöglichkeiten (15) für den Mischer (2) aufweist.

4. Anordnung nach einem oder mehreren der vorhergehenden Ansprüche, **dadurch gekennzeichnet, dass** das Rohr (7), in das der Mischer (2) eingesetzt ist, eine Anschlußmöglichkeit (12) für Gaseinspeisung und eine Flüssigkeitseinspeisung (4) aufweist.

5. Anordnung nach einem oder mehreren der vorhergehenden Ansprüche, **dadurch gekennzeichnet, dass** das Rohr (7), in dem der Mischer (2) sitzt, eine Anschlußmöglichkeit (10) für Geschmacksstoffe, insbesondere alkoholfreie oder alkoholische, aufweist.

6. Anordnung nach einem oder mehreren der vorhergehenden Ansprüche, **dadurch gekennzeichnet, dass** das Rohr (7) eine Anschlußmöglichkeit (12) für ein Gasbehältnis (13) aufweist.

7. Anordnung nach einem oder mehreren der vorhergehenden Ansprüche, **dadurch gekennzeichnet, dass** an das Rohr (7) ein Gasbehältnis (13) angeschlossen ist.

8. Anordnung nach einem oder mehreren der vorhergehenden Ansprüche, **dadurch gekennzeichnet, dass** das Rohr (7) aus VA-Stahl besteht.

9. Anordnung nach einem der Ansprüche 1 bis 7, **dadurch gekennzeichnet, dass** das Rohr (7) aus Kunststoff besteht.

10. Anordnung nach einem oder mehreren der vorhergehenden Ansprüche, **dadurch gekennzeichnet, dass** der Mischer (2) für die Versorgung mit Flüssigkeit und Gas Druckminderer für die Flüssigkeit und das Gas aufweist, die jeweils mit einer Festeinstellung im Verhältnis des Gases zur Flüssigkeit versehen ist.

11. Anordnung nach einem oder mehreren der vorhergehenden Ansprüche, **dadurch gekennzeichnet, dass** das Rohr (7) mit einer Zuleitung für gekühlte Flüssigkeit versehen ist.

12. Anordnung nach einem oder mehreren der vorhergehenden Ansprüche, **dadurch gekennzeichnet, dass** der Rohr (7) mit einem Zapfventil oder einer Mischbatterie für die Entnahme von Sodawasser verbunden ist.

13. Anordnung nach einem oder mehreren der vorhergehenden Ansprüche, **dadurch gekennzeichnet, dass** der Mischer (2) in eine Reinigungsmaschine integriert ist.

14. Anordnung nach einem der Ansprüche 1 bis 15, **dadurch gekennzeichnet, dass** der Mischer (2) in eine Waschmaschine integriert ist.

15. Anordnung nach einem oder mehreren der vorhergehenden Ansprüche, **dadurch gekennzeichnet, dass** das Rohr (7) bei einer vorgegebenen Durchströmgeschwindigkeit des Gas-Flüssigkeitsgemisches eine für eine notwendige Reaktionszeit geeignet Länge aufweist.

16. Anordnung nach einem oder mehreren der vorhergehenden Ansprüche, **dadurch gekennzeichnet, dass** der Mischer (2) aus mindestens zwei hintereinander geschalteten Teilmischern besteht.

17. Anordnung nach einem oder mehreren der vorhergehenden Ansprüche, **dadurch gekennzeichnet, dass** der Mischer (2) eine Einstellmöglichkeit für unterschiedliche Mischungsverhältnisse beim Mischen von Gas mit Flüssigkeiten aufweist.

18. Anordnung nach einem oder mehreren der vorhergehenden Ansprüche, **dadurch gekennzeichnet, dass** die Versorgungsleitungen (4,10,11) für Flüssigkeiten, Geschmacksstoffe und Gase getrennt voneinander am Rohr (7) befestigt sind.

19. Verwendung der Anordnung zum Mischen nach einem der Ansprüche 1 bis 28 zum Einbringen eines Gases, vorzugsweise CO₂, in eine Flüssigkeit.

## Claims

1. System for mixing liquids with gas in a mixer (2) which is arranged in a tube (7) which in each case has a connection for a gas feed (9) and a liquid feed (4) and also an offtake (5) for the liquid mixed with gas, and in which, between the connections (9, 4) for the gas feed and for the liquid feed on the one hand and the offtake (5) for the liquid mixed with gas on the other hand, trays through which the liquid and gas can flow are provided, **characterized in that** the trays are developed as mixing screens (1) which lie adjacent to one another.

2. System according to one or more of the previous claims, **characterized in that** the mixer (2), which is composed of individual mixing screens (1), is located in a tube (7).

3. System according to one or more of the previous claims, **characterized in that** the mixer (2) is located in a tube (7) and has integrated attachment means (15) for the mixer (2).

4. System according to one or more of the previous claims, **characterized in that** the tube (7) into which the mixer (2) is fitted has connection means (12) for a gas feed and a liquid feed (4).

5. System according to one or more of the previous claims, **characterized in that** the tube (7) in which the mixer (2) sits has attachment means (10) for flavourings, in particular alcohol-free or containing alcohol.

6. System according to one or more of the previous claims, **characterized in that** the tube (7) has attachment means (12) for a gas container (13).

7. System according to one or more of the previous claims, **characterized in that** a gas container (13) is connected to the tube (7).

8. System according to one or more of the previous claims, **characterized in that** the tube (7) is composed of VA steel.

9. System according to one of claims 1 to 7, **characterized in that** the tube (7) is made of plastic.

10. System according to one or more of the previous claims, **characterized in that** the mixer (2) has, for the supply of liquid and gas, pressure reducers for the liquid and the gas each of which is provided with a fixed gas-to-liquid ratio setting.

11. System according to one or more of the previous claims, **characterized in that** the tube (7) is provided with a feed line for cooled liquid.

12. System according to one or more of the previous claims, **characterized in that** the tube (7) is connected to a dispensing valve or a mixer device for drawing off soda water.

13. System according to one or more of the previous claims, **characterized in that** the mixer (2) is integrated into a cleaning machine.

14. System according to one of claims 1 to 15, **characterized in that** the mixer (2) is integrated into a washing machine.

15. System according to one or more of the previous claims, **characterized in that** the tube (7) is of a length suitable for a necessary reaction time for a predetermined throughflow speed of the gas-liquid mixture.

16. System according to one or more of the previous claims, **characterized in that** the mixer (2) is composed of at least two part-mixers connected in series.

17. System according to one or more of the previous claims, **characterized in that** the mixer (2) has setting means for different mixing ratios when mixing gas with liquids.

18. System according to one or more of the previous claims, **characterized in that** the supply lines (4, 10, 11) for liquids, flavourings and gases are attached to the tube (7) separately from one another.

19. Use of the mixing system according to one of claims 1 to 28 for the introduction of a gas, preferably CO₂, into a liquid.

## Revendications

1. Agencement pour mélanger des liquides avec du gaz dans un mélangeur (2) qui est disposé dans un tube (7), qui comporte un raccordement pour une alimentation de gaz (9) et un raccordement pour une alimentation en liquide (4), ainsi qu'un soutirage (5) du liquide mélangé au gaz et dans lequel on a prévu entre les raccordements (9, 4), pour l'alimentation en gaz et pour l'alimentation en liquide d'une part et le soutirage (5) du liquide mélangé au gaz d'autre part, des fonds pouvant être traversés par le liquide et par le gaz, **caractérisé en ce que** les fonds sont conçus sous la forme de tamis de mélange (1) adjacents les uns aux autres.

2. Agencement selon l'une ou plusieurs des revendications précédentes, **caractérisé en ce que** le mélangeur (2) composé de tamis de mélange (1) individuels se trouve dans un tube (7).

3. Agencement selon l'une ou plusieurs des revendications précédentes, **caractérisé en ce que** le mélangeur (2) se trouve dans un tube (7) et comporte des possibilités de fixation intégrées (15) pour le mélangeur (2).

4. Agencement selon l'une ou plusieurs des revendications précédentes, **caractérisé en ce que** le tube (7) dans lequel le mélangeur (2) est utilisé comporte une possibilité de raccordement (12) pour une alimentation en gaz et une alimentation en liquide (4).

5. Agencement selon l'une ou plusieurs des revendications précédentes, **caractérisée en ce que** le tube (7) dans lequel est logé le mélangeur (2) comporte une possibilité de raccordement (10) pour des arômes artificiels, notamment sans alcool ou alcoolisés.

6. Agencement selon l'une ou plusieurs des revendications précédentes, **caractérisé en ce que** le tube (7) comporte une possibilité de raccordement (12) pour un contenant à gaz (13).

7. Agencement selon l'une ou plusieurs des revendications précédentes, **caractérisé en ce que** le tube (7) est raccordé à un contenant à gaz (13).

8. Agencement selon l'une ou plusieurs des revendications précédentes, **caractérisé en ce que** le tube (7) est en acier VA.

9. Agencement selon l'une des revendications 1 à 7, **caractérisé en ce que** le tube (7) est en matière plastique.

10. Agencement selon l'une ou plusieurs des revendications précédentes, **caractérisé en ce que** le mélangeur (2) pour l'alimentation en liquide et en gaz comporte des réducteurs de pression pour le liquide et le gaz, qui sont respectivement munis d'un réglage fixe du gaz par rapport au liquide.

11. Agencement selon l'une ou plusieurs des revendications précédentes, **caractérisé que** le tube (7) est muni d'une conduite d'alimentation en liquide refroidi.

12. Agencement selon l'une ou plusieurs des revendications précédentes, **caractérisé en ce que** le tube (7) est relié à une soupape de soutirage ou à une batterie de mélange pour prélever du soda.

13. Agencement selon l'une ou plusieurs des revendications précédentes, **caractérisé en ce que** le mélangeur (2) est intégré dans une machine de nettoyage.

14. Agencement selon l'une des revendications 1 à 15, **caractérisé en ce que** le mélangeur (2) est intégré dans un lave-linge.

15. Agencement selon l'une ou plusieurs des revendications précédentes, **caractérisé en ce que** le tube (7) comporte, pour une vitesse de circulation prédéfinie du mélange gaz/liquide, une longueur adaptée permettant un temps de réaction nécessaire.

16. Agencement selon l'une ou plusieurs des revendications précédentes, **caractérisé en ce que** le mélangeur (2) est composé d'au moins deux mélangeurs partiels montés l'un derrière l'autre.

17. Agencement selon l'une ou plusieurs des revendications précédentes, **caractérisé en ce que** le mélangeur (2) comporte une possibilité de réglage pour différentes proportions de mélange, lors du mélange de gaz avec du liquide.

18. Agencement selon l'une ou plusieurs des revendications précédentes, **caractérisé en ce que** les conduites d'alimentation (4, 10, 11) en liquides, en arômes artificiels et en gaz sont fixées sur le tube (7) en étant séparées les unes des autres.

19. Utilisation de l'agencement pour mélanger selon l'une quelconque des revendications 1 à 28, pour introduire un gaz, de préférence du CO₂, dans un liquide
